# EUROPEAN PATENT SPECIFICATION

(11) **EP 2 417 489 B1**
(45) Date of publication and mention of the grant of the patent: **08.03.2017**
(21) Application number: 10761121.2
(22) Date of filing: 06.04.2010
(51) Int. Cl.: G02B 27/22, B41M 3/14, B42D 15/00, G06K 5/00, G06K 19/00, G07D 7/00, B42D 25/00

(54) **METHOD OF MANUFACTURING A SECURITY DOCUMENT OR DEVICE WITH AN OPTICALLY VARIABLE IMAGE**
HERSTELLUNGSVERFAHREN FÜR EIN SICHERHEITSDOKUMENT ODER EINE SICHERHEITSVORRICHTUNG MIT OPTISCH VARIABLEM BILD
PROCÉDÉ DE FABRICATION D'UN DOCUMENT OU DISPOSITIF DE SÉCURITÉ À IMAGE OPTIQUEMENT VARIABLE

(30) Priority: 06.04.2009 AU 2009901462
(43) Date of publication of application: 15.02.2012
(73) Proprietor: Reserve Bank of Australia, Sydney, NSW 2000 (AU)
(72) Inventor: MAGUIRE, Luke, Victoria 3064 (AU); FOX, Phillip, Victoria 3064 (AU)
(74) Representative: Fulton, David James
(86) International application number: PCT/AU2010/000388
(87) International publication number: WO 2010/115235

(56) References cited:
- WO-A1-01/63341
- WO-A1-2006/029744
- WO-A1-2008/031170
- CA-A1- 2 636 813
- US-A- 4 765 656
- US-A1- 2008 037 131

## Description

The present invention relates to security documents and devices which form optically variable images and is particularly, but not exclusively, applicable to non-rigid security documents such as banknotes or the like.

It is known to apply optically variable images to security documents, such as identity cards, passports, credit cards, bank notes, cheques and the like, see for example Canadian patent publication number CA 2,636,813 (that discloses the preamble of claim 1) and International publication number WO 2008/031170. Such images have the advantages of being difficult to falsify or copy. In particular, optical variable images which produce different effects at different angles of view provide both a method of preventing the casual counterfeiter, as copy machines or scanners do not reproduce these effects, and an overt security feature, being recognisable by the general public. Accordingly, such optically variable images may be used to provide an effective security feature.

"Flipping" image style features, where the image viewed varies depending on the angle of view, have been previously demonstrated on security documents. There are two main methods of combining images with documents containing lenticular lenses to produce a flipping effect. An image can be applied, for example by printing, on a separate sheet, which is then affixed to the document containing the lenses, or the image may be provided on the security document behind the lenses.

Printed lenticular images are restricted by the resolution permitted by the printing process, as the lens pitch must be sufficiently large to accommodate the printed lines. Because the pitch has to be of a larger size, security documents created with printed lenticular images are not very flexible. This increase in pitch also permits a tolerance for skewing of the image relative to the lenses. If the lines of the interlaced image are sufficiently skewed, then it is not possible to resolve a single image when tilting the document.

US 4,765,656 discloses an optical authenticity feature for credit cards and the like. The optical authenticity feature includes a lenticular array on a carrier material. A laser beam is used at an angle to the carrier material to cause a change in the optical properties of the carrier material, such as by "blackening" a heat sensitive material, and produce an image viewable at that angle. Problems with the optical authenticity feature of US 4,765,656 include the issue of applying such a feature to a security document other than a credit card, the creation of such a feature with a greater definition of image, the creation of such a feature viewable from more than one side of a security document, a method of manufacturing such a feature on a security document other than a credit card and a method of manufacturing such a feature at high throughput rates.

It is an object of the present invention to provide a security document or device and method of manufacture in which one or more of the above problems are alleviated.

There may be provided a security document or device including:
a substantially transparent material having a first side and a second side;
an array of lenses arranged on the first side; and
an ablative layer, which is reflective or at least partially opaque, arranged on the second side,
characterised in that
the ablative layer is an outermost reflective or opaque layer on the second side, and has one or more patterns formed by removal of the ablative layer and the or each pattern is viewable at a particular viewing angle or range of angles to form a 'flipping image' viewable in transmission from both sides of the material.

Preferably, the substantially transparent material is a non-rigid, sheet-like substrate. As used herein, the term non-rigid, sheet-like substrate refers to a substrate which has a high degree of flexibility to the extent that it can be folded over itself. For instance, paper and polymeric substrates used in the manufacture of banknotes are non-rigid, sheet-like substrates, whereas stiffer sheet-like substrates used in the manufacture of credit cards and the like, whilst being able to be flexed, are rigid insofar as they cannot be folded without damaging the card. Whilst the present invention has application to rigid security documents such as credit cards, the invention is particularly applicable to non-rigid security documents, such as banknotes or pages in a passport. In this case, the array of lenses and ablative layer are preferably also flexible to the same extent as the non-rigid, sheet-like substrate. Preferably, the array of lenses is formed on a fully transparent substrate which allows the transmission of light substantially unaffected. Alternatively, it may be possible for the lens array to be formed on a translucent material, though this may reduce the visual affect produced by the security device.

Preferably, the array of lenses has a focal plane substantially congruent with the ablative layer.

In one preferred embodiment, the one or more patterns are viewable in both reflective and transmissive light.

Surprisingly, when the ablative layer is the outermost reflective or opaque layer, the one or more patterns may be viewed in transmission from both sides of the substantially transparent material, but are viewable in reflection only from the side of the material on which the lens array is provided.

In a particularly preferred embodiment, the plurality of patterns in the ablative layer together form a composite image. The composite image may be viewable in transmission at a particular viewing angle or range of viewing angles from both sides of the substantially transparent material. When viewed in reflection from the side on which the ablative layer is provided, only the composite image may be seen, and not the "flipping image".

The array of lenses may be integrated into the first surface of the substantially transparent material, *eg* by an embossing process. The first surface of a substantially transparent substrate may itself be embossed. Alternatively, a substantially transparent material, *eg* a radiation curable resin, lacquer or ink, may be applied to a substrate and embossed to form an embossed lens structure on the substrate. Preferably, the substrate is a transparent polymer.

Preferably, the ablative layer is a printed layer on the second surface of the substantially transparent material. In a particularly preferred embodiment, the ablative layer is formed from a reflective or opaque ink.

Preferably, the lens array is an array of microlenses having a pitch falling substantially within the range from about 25µm to about 90µm. For banknotes, the pitch of the microlenses preferably falls substantially in the range from about 30µm to about 50µm, and for data pages in passports the pitch preferably falls substantially in the range from about 70µm to about 85µm.

Preferably, the substrate has a thickness which does not exceed 170µm. For data pages in passports, the substrate thickness may fall substantially in the range from about 130µm to about 145µm. If the sag of the lenses (the protrusion of the lenses above the substrate surface) is about 20µm, this results in a focal length of the lenses falling substantially in the range from about 150µm to about 165µm. For more flexible, non-rigid security documents such as banknotes, the thickness of the substrate preferably does not exceed 100µm, and more preferably falls substantially in the range from about 60µm to about 90µm. With a sag of about 10µm, this results in a focal length falling substantially in the range from about 70µm to about 100µm. Security documents such as data pages and banknotes are substantially thinner than commercially available lenticular films, which itself provides additional security against counterfeiting, since the "flipping image" effect cannot be simulated by adhering to a substrate image produced on a commercially available lenticular film without significantly increasing the thickness of the security document.

According to a first aspect of the present invention there is provided a method of manufacturing a security document including:
providing a substantially transparent material having a first side and a second side;
arranging an ablative layer, which is at least partially reflective or opaque, on the second side of the material to be an outermost reflective opaque layer;
forming an array of lenses on the first side of the material, the array of lenses arranged to at least partially focus light towards the ablative layer; and
exposing the ablative layer to incident laser light, resulting in the removal of the ablative layer on the second side of the substrate in a plurality of areas to create two or more patterns,
characterised in that
each pattern is viewable at a particular viewing angle or range of angles to form a 'flipping image' viewable in transmission from both sides, wherein two said patterns are created and the ablative layer is exposed to the incident laser light through the array of lenses at equal and opposite angles from the axis perpendicular to the first side of the substantially transparent material.

Preferably, the method further includes integrating the array of lenses into a surface on the first side of the material.

Preferably, the array of lenses is integrated by an embossing process. For instance, the lens array could be embossed directly into a first surface of a substantially transparent substrate, or by a self-embossing process in which a radiation-curable material is applied to a surface of a substrate, embossed to form the lenses and cured with radiation, or by hot-stamping.

Preferably, the method further includes printing the ablative layer onto the second surface of the material.

Preferably, the method further includes exposing the ablative layer to two patterns of incident laser light at two angles, thereby removing the ablative layer from the second side of the substantially transparent material in a plurality of areas to create two patterns.

Optionally, the method further includes applying a further opaque layer on the ablative layer, the pattern or patterns formed in the ablative layer being viewable only in reflective light from the side of the substantially transparent material in which the lens array is formed.

Embodiments of the present invention will now be described, by way of example only, with reference to the drawings, in which:
Fig. 1 shows a partial cross-sectional view of a security document or device according to one embodiment of the invention;
Fig. 2A and 2B show viewing of a security document according to one embodiment of the invention at different angles;
Fig. 3A, 3B and 3C show patterning of an interlaced image according to one embodiment of the invention at different angles;
Fig. 4 shows a method of creating images on a security document according to one embodiment of the invention; and
Fig. 5 shows a close up of lines which make up an image on a security document according to one embodiment of the invention.

In the context of this application, ablation or ablating a material is defined as the removal of that material at the point of ablation. That is to say, the removal of the material in its entirety from the relevant area to form apertures in the ablative layer, rather than, for example, only partial removal of material from the surface of a layer.

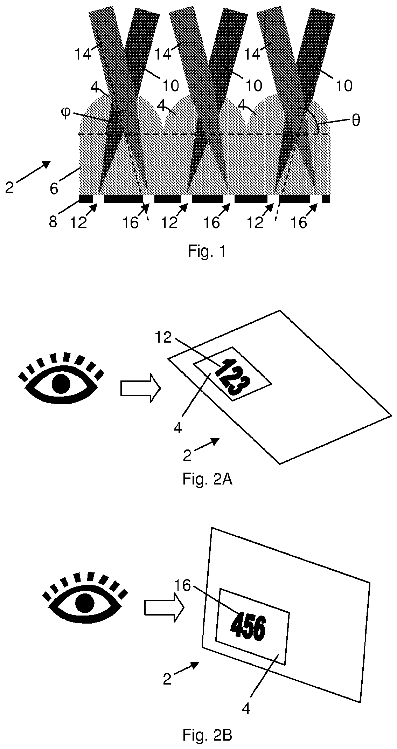

Referring to Fig. 1, a portion of a security document 2 is shown having an array of microlenses 4, a substantially transparent substrate 6 and an opaque or reflective ablative layer 8. The security document 2 is shown in the process of creating optical variable images. A first ray of laser light 10 is shown at a first angle θ to the array of microlenses 4 and which is subsequently focussed by the microlenses 4 and ablates areas to form apertures 12 in the ablative layer 8. A second ray of laser light 14 is shown at a second angle ϕ to the array of microlenses 4 and which is subsequently focussed by the microlenses 4 and ablates areas to form apertures 16 in the ablative layer 8.

The array of microlenses, which are also known as lenticular arrays, can include aspherical or asymmetrical microlenses or a suitable mixture of both. Aspherical microlenses can be used to better match refractive indices of the microlens material and substrate, if they are different, and help reduce spherical aberration.

It should be appreciated that although a particular angle (the first angle θ and second angle ϕ) is determined at which the first and second rays of laser light are arranged, this, in fact, produces a range of angles at which the ablated areas can be viewed, either side of the chosen angle. This range of angles, or viewing range, can be chosen by either careful selection of the size of the focussing line or spot of each of the microlenses or by ablating at more than one angle at which the viewing range of each angle overlaps.

A mask may be provided in front of the first and/or second laser so that a pattern or image is created in the ablative layer 8. By choosing different masks for each of the lasers a "flipping" image can be created. That is, as the security document is tilted or rotated, the visible image changes between pattern or images created at each viewing range.

Once the areas 12 and 16 have been ablated, a person viewing the security document 2 will be able to view a change in the optical characteristics of the area over which the array of microlenses 4 is arranged. In particular, if a person changes the viewing angle of the security document 2 they will view areas ablated by the first and second rays of laser light at the first angle θ and second angle ϕ respectively.

Referring to Fig. 2A, a security document 2 is shown, which in this case is a bank note, including an array of microlenses 4, as described in relation to Fig. 1. The security document 2 is being viewed at an angle to its surface of around the first angle θ and, therefore, ablated areas 12 are visible through the array of microlenses 4, due to the fact that they do not reflect light in the same manner as the ablative layer 8, showing a pattern of the numbers "123". Fig. 2B then shows the same security document being viewed at the second angle ϕ. In this case, it is ablated areas 16 which are visible through the array of microlenses 4, showing a pattern of the numbers "456".

In a preferred embodiment, the ablative layer 8 reflects light when viewed through the array of microlenses 4. In this manner, the areas which have been ablated do not reflect light and this provides a distinct contrast when a person changes the viewing angles such that the microlenses focus on reflective and non-reflective areas.

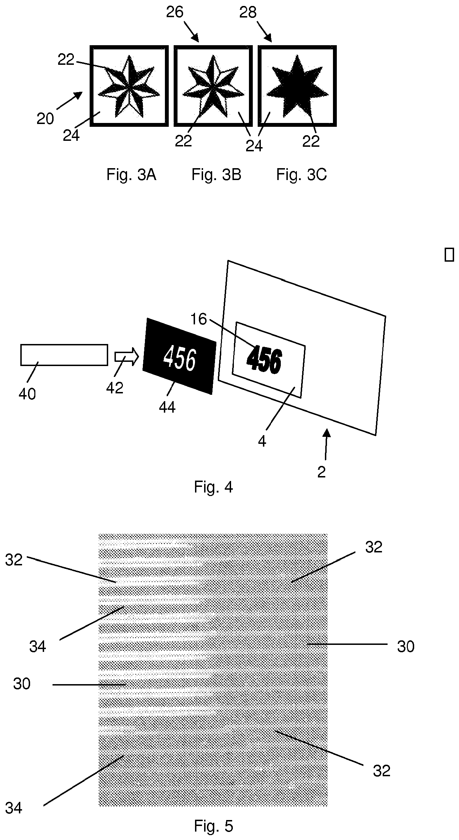

Referring to Fig. 3a, a first pattern 20 is shown having ablated areas 22 (shown in black) and reflective areas 24 (shown in white). In this example, the first pattern 20 is created by a first laser light exposure through a corresponding first pattern mask (not shown) at a first angle, for example 7°-10° from an axes perpendicular to the surface of a security document as discussed in relation to Fig. 2. In Fig. 3B, a second pattern 26 is shown, again, having ablated areas 22 (shown in black) and reflective areas 24 (shown in white). The second pattern 26 is created by a second laser light exposure through a corresponding second pattern mask (not shown) at a second angle, for example 7°-10° from the opposite side of the perpendicular axes than that of Fig. 3A. In Fig. 3C, a third pattern 28 is shown. The pattern 28 is the composite image formed by the two images 24 and 26 Fig. 3A and Fig. 3B.

It will be noted that the patterns 24 and 26 in Figs 3A and 3B together form the composite image or pattern 28 in Fig. 3C. This can lead to different effects when the security device is viewed from opposite sides of the substrate in reflection and transmission.

For example, when the security device is viewed in transmission from the side of the substrate on which the microlens array is provided, a flipping image or switching effect is observed when the security document is tilted or the viewing angle changes. Surprisingly, this flipping effect is also clearly observable when the security device is viewed in transmission from the opposite side of the substrate, *ie* the side on which the ablative layer is provided. In contrast, when the security device is viewed in reflection, the flipping effect can only be observed from the side of the substrate on which the microlens array is provided. When viewed from the opposite side of the substrate, *ie* the side on which the ablative layer is provided, the composite image 28 or pattern of Fig. 3C can be seen.

Manufacture of the security document 2 is most preferably performed by using a transparent plastics substrate, such as a biaxially oriented polymeric substrate, sold by Securency under the trade mark Guardian^{®} which then has an array of microlenses integrated onto an area on one surface through use of a soft embossing process (such as that described in Securency patent application WO 2008/031170, which is herein incorporated by reference in its entirety) or by hot-stamping. The microlenses sit proud of the upper surface of the security document 2, as shown in Fig. 1. A reflective or opaque ablative later 8 is then applied to the opposite side of the substrate 6 by, for example, printing or, more particularly, gravure, flexographic, lithographic or screen printing. The ablative layer 8 may include metallic or optically colour shifting pigments to create high lustre or colour switching images or patterns.

Fig. 4 shows, in more detail, the creation of an image or pattern on the ablative layer 8. A laser 40 emits laser light 42 on to a mask 44. The mask blocks the laser light 42 from reaching the security document, except in the areas in which an image is to be created. The laser light 42 is focussed by the each of the microlens in the array 4 and the ablative layer 8 is removed at the points at which the laser light meets said layer 8.

By selecting an appropriate focal length, a pre-determined spot width at the rear surface of the substrate can be selected. The microlenses are, typically, designed such that their focal plane coincides with, or is slightly beyond, the lower surface of the substrate. That is, the microlenses focal length is equivalent to, or slightly longer, than the width of the substrate. It is also possible to select a focal length less than the width of the substrate, which results in light rays diverging from the focal point to create a suitable pre-determined spot width. However, a focal point shorter than the width of the substrate would require a larger sag (the distance that the lenses protrude above the surface of the substrate), which is less desirable because it produces a thicker document in total.

In order to create a flexible non-rigid security document, a substrate having a thickness of less than approximately 170µm is desirable and, preferably, in the region of 60µm to 90µm for applications such as a banknote. This constraint on document thickness necessarily limits the pitch of the lenses, that is, the width of each microlens. To provide a flexible non-rigid security document it has been found that a pitch between microlenses of between 30µm to 50µm is preferable and, ideally, of 43µm. The key factors are pitch, sag, and focal length. For example, a using 43µm pitch lenses with a 10µm sag, gives a focal length (from top of the microlens) of around 85µm. The ablative layer adds a further thickness of, typically, less than 10µm.

If two images are to be imaged into the ablative layer, the laser light is, according to the present invention, presented at equal and opposite angles from the axis perpendicular to the substrate surface. The angle at which laser light is presented to the array of microlenses is dictated by the pitch of the microlenses and thickness of the security document. Using a larger angle results in better distinction between the two image frames, creating a more distinct interchange effect when the document is tilted between the two frames. As the two images are created at angles each side of the central lens axis, the ablated images are created as interlaced strips in the ablative layer.

Referring to Fig. 5, a close up of an ablative layer (approximately 200x magnification) having two such interlaced images is shown. Solid areas 30 are the original ablative layer. A first set of lines 32 has been ablated from the ablative layer immediately above a second set of lines 34, which have also been ablated from the ablative layer. The first set of lines 32 has been created by applying laser light at a first angle through a first mask. The second set of lines 34 has been created by applying laser light at a second angle through a second mask. At the top left of Fig. 5 areas in which both the first and second sets of lines 32, 34 have been created from the ablative layer. The bottom left shows only the second set of lines 34, as the first mask would have blocked laser light for the first set of lines in this area. The right hand side of Fig. 5 shows only the first set of lines 32, again because the second mask would have blocked this area. Importantly, each image frame, that is, either the first or second set of lines, can be ablated simultaneously, using two separate sources of laser light, or imaged sequentially using the same source of laser light.

The line width used to form the image or pattern made up of the first and second sets of lines is set by the design of the microlens, removing the constraint related to prior art systems which are constrained by printing resolution. In particular, the security document produced with this ablative process enables the flexibility of a banknote.

Alternatively, and not claimed, it may be possible to expose the ablative layer to laser light through a mask directly on to the ablative layer, removing the need to expose through the array of microlenses. This does require more precise registration of the mask in relation to the microlenses but the security document created still has the advantages of a greater definition of image, due to the precise edges which can be removed in the ablative layer and the patterns can be viewed in both transmissive and reflective light, that is, from more than one side of a security document,

As a practical issue, the number of interlaced images which are possible, at least when they overlap, is dependent on the size of the line width that each microlens creates. There has to be a small separation between lines of different images and, for a non-rigid security document such as a banknote, a suitable number of distinctive interlaced images is four or less.

The ablative layer, which may be any suitable coating, block of ink, or other radiation-sensitive layer is applied, through printing or other means, to the lower surface of the substrate. The creation of the image through removal of material is particularly beneficial because the ablative layer can be laid down in sufficient thickness to create true colour shades, that is, for example, proper black tones. This contrasts directly with prior art devices which cause an alteration in a property of the recording material, for example through marking or adjustment of reflectivity. The images produced by these prior art methods have soft contrast, and appear as weak grey shades rather than black images, because the marking, , especially when dependent on heat, affects areas of the substrate which are not directly in the path of light rays.

Furthermore, because the ablative layer is on the outer surface of the security document and has portions of material removed, it is also possible to view the created images in transmission from the reverse side of the security document (that is, viewing from the side of the ablative layer, rather than the side of the array of microlenses). In fact, it is still possible to view a transition between the created images when the security document is tilted when viewing from the reverse side, although the transition may be less-striking than when viewed from the front.

In an alternative embodiment of the security document the ablative layer is printed over after creation of the images or patterns by laser light. Any suitable printing technique may be used. Printing over the ablative layer, of course, prevents viewing of the images or pattern from the reverse side of the security document. However, a print layer provides additional contrast when viewing the images or patterns from the front side of the security document thought the array of microlenses.

The ablative layer material is removed as the microlenses focus the incident laser radiation to a sufficient energy density to ablate the material away from the substrate. The incident laser is chosen to be of sufficient power to ablate the ablative layer but not damage the substrate. The microlenses focus the laser to a sufficient energy density to remove the coating from the rear of the substrate. Preferably, the laser is a pulsed laser, with pulses of duration in the order of 6ns, such that the material is removed without any heating effect being imparted to the security document.

The flexibility of image creation is limited only by the laser power required to remove the ablative layer chosen. The inventors have found that almost all inks, including metallic offset inks, can be removed using commercially available lasers.

Furthermore, images or patterns created by ablation of an ablative layer by laser light can be produced at a very fast rate, reducing cost of production. It is possible to create interlaced images simultaneously by exposing the array of microlenses to laser light at different angles (this can be done from light from the same laser which has been split and reflected or by multiple lasers). As a result, creating interlaced images takes the same time as creating just one image. Security documents, such as banknotes, can be produced at a rate of 8000 to 10000 sheets of documents an hour on a single machine. This gives a speed of movement of a sheet containing the banknotes of around 1.5 to 2 metres per second.

Production of the images or patterns using laser ablation removes the requirement to provide a registration tolerance. As the array of microlenses focus the laser light onto the ablative layer, the process is 'self-registering'. The position of the lines which make up the images or patterns is determined by the angle of incidence of the laser light, and this angle also sets the viewing angle. No tolerance for registration is required. Any skewing of the substrate position with respect to the laser light will only result in a rotation of the image produced, without change of the efficacy of the feature. As a registration tolerance is not required, the lens pitch can be reduced sufficiently to allow a truly flexible security document.

Further modifications and improvements may be made without departing from the scope of the present invention as defined by the appended claims.

## Claims

1. A method of manufacturing a security document or device (2) including:
providing a substantially transparent material (6) having a first side and a second side;
arranging an ablative layer (8), which is at least partially reflective or opaque, on the second side of the material (6) to be an outermost reflective opaque layer;
forming an array of microlenses (4) on the first side of the material (6), the array of microlenses (4) arranged to at least partially focus light towards the ablative layer (8); and
exposing the ablative layer (8) to incident laser light (42), resulting in the removal of the ablative layer (8) on the second side of the material (6) in a plurality of areas to create a plurality of patterns (12, 16),
**characterised in that**
each pattern (12, 16) is viewable only at a particular viewing angle or range of angles to form a 'flipping image' viewable in transmission from both sides, wherein two said patterns are created and the ablative layer (8) is exposed to the incident laser light (42) through the array of microlenses (4) at equal and opposite angles from an axis perpendicular to the first side of the substantially transparent material (6).

2. A method as claimed in claimed in claim 1, including printing the ablative layer (8) onto a surface on the second side of the material (6).

3. A method as claimed in either of claims 1 or 2, including exposing the ablative layer (8) to the incident laser light (42) at two angles, removing the ablative layer (8) from the second side of the substantially transparent material (6) in a plurality of areas to create two patterns (12, 16).

## Patentansprüche

1. Eine Methode zur Fertigung eines Sicherheitsdokuments oder einer Sicherheitsvorrichtung (2) einschließlich:
der Bereitstellung eines im Wesentlichen transparenten Materials (6), das eine erste und eine zweite Seite hat;
der Anordnung einer ablativen Schicht (8), die mindestens teilweise spiegelnd oder undurchsichtig ist, auf der zweiten Seite des Materials (6) als eine äußerste spiegelnde undurchsichtige Schicht;
der Bildung eines Mikrolinsen-Arrays (4) auf der ersten Seite des Materials (6), wobei der Mikrolinsen-Array (4) so angeordnet ist, dass er mindestens teilweise Licht auf die ablative Schicht (8) fokussiert; und
der Exposition der ablativen Schicht (8) gegenüber dem einfallenden Laserlicht (42), was zur Entfernung der ablativen Schicht (8) auf der zweiten Seite des Materials (6) in einer Vielzahl von Bereichen führt, um eine Vielzahl von Mustern (12, 16) zu erzielen, **dadurch gekennzeichnet, dass**
jedes Muster (12, 16) nur aus einem bestimmten Blickwinkel oder Winkelspektrum sichtbar ist, um ein "gespiegeltes Bild" zu ergeben, das in der Übertragung von beiden Seiten sichtbar ist, wobei die zwei besagten Muster erzeugt werden und die ablative Schicht (8) dem einfallenden Laserlicht (42) durch den Mikrolinsen-Array (4) in gleichen und
entgegengesetzten Winkeln von einer Achse ausgesetzt wird, die zur ersten Seite des im Wesentlichen transparent Materials (6) senkrecht steht.

2. Eine Methode nach Anspruch 1, einschließlich des Druckens der ablativen Schicht (8) auf eine Oberfläche auf der zweiten Seite des Materials (6).

3. Eine Methode nach entweder Anspruch 1 oder 2, einschließlich der Exposition der ablativen Schicht (8) gegenüber dem einfallenden Laserlicht (42) in zwei Winkeln, wobei die
ablative Schicht (8) von der zweiten Seite des im Wesentlichen transparenten Materials (6) in einer Vielzahl von Bereichen entfernt wird, um zwei Muster (12, 16) zu erzeugen.

## Revendications

1. Une méthode de fabrication d'un document ou dispositif sécurisé (2) incluant :
fournir un matériau très transparent (6) ayant une première face et une seconde face ;
disposer une couche ablative (8), au moins partiellement réfléchissante ou opaque, sur la seconde face du matériau (6) qui constitue la couche opaque réfléchissante la plus à l'extérieur ;
former un réseau de micro lentilles (4) sur la première face du matériau (6), le réseau de micro lentilles (4) étant disposé pour focaliser au moins partiellement la lumière vers la couche l'ablative (8) ; et
Exposer la couche ablative (8) à une lumière laser incidente (42), entrainant la suppression de la couche ablative (8) sur la seconde face du matériau (6) dans plusieurs zones pour créer plusieurs motifs (12, 16),
caractérisé ainsi
chaque motif (12, 16) n'est visible que sous un angle de vision particulier ou sous plusieurs angles pour former une 'image basculante' visible en transmission à partir des deux
faces, dans lequel deux motifs sont créés et la couche ablatif (8) est exposée à la lumière laser incidente (42) par l'intermédiaire du réseau des micro lentilles (4) sous des angles égaux et
sous des angles opposés par rapport à un axe perpendiculaire à la première face du matériau très transparent (6).

2. Une méthode conforme à la revendication 1, incluant l'impression de la couche ablative (8) sur une surface, sur la seconde face du matériau (6).

3. Une méthode conforme à l'une des revendications 1 ou 2, incluant l'exposition de la couche ablative (8) à la lumière laser incidente (42) suivant deux angles, en supprimant la couche ablative (8) de la seconde face du matériau très transparent (6) dans plusieurs zones de manière à créer deux motifs (12, 16)
